# FASCICULE DE BREVET EUROPEEN

(11) **EP 1 923 315 B1**
(45) Date de publication et mention de la délivrance du brevet: **07.04.2010**
(21) Numéro de dépôt: 07015544.5
(22) Date de dépôt: 07.08.2007
(51) Int. Cl.: B65B 69/00, A22C 11/00

(54) **Procédé pour retirer une poche d'un pain de produit alimentaire**
Verfahren zum Entfernen einer Tasche von einem brotartigen Lebensmittel
Method for removing a pocket from a loaf of food product

(30) Priorité: 14.11.2006 FR 0609953
(43) Date de publication de la demande: 21.05.2008
(73) Titulaire: ARMOR INOX SA, 56430 Mauron (FR)
(72) Inventeur: Malard, Bertrand, 56430 Mauron (FR)
(74) Mandataire: Maillet, Alain

(56) Documents cités:
- EP-A- 0 528 351
- EP-A- 0 692 429
- EP-A1- 0 525 756
- EP-A2- 0 604 795
- WO-A-95/25040
- WO-A-96/17522
- WO-A-96/28352
- GB-A- 2 236 517
- JP-A- 9 286 422
- JP-A- 60 045 129
- JP-A- 2000 272 615
- NL-A- 9 201 286
- US-A- 4 219 299
- US-A1- 2002 162 302

## Description

La présente invention concerne un procédé pour retirer une poche enveloppant un pain de produit alimentaire, ainsi qu'un dispositif permettant de retirer une poche enveloppant un pain de produit alimentaire. Elle trouve application dans le domaine du traitement industriel des produits alimentaires, du type viandes cuites et, en particulier, du type pain de jambon.

Avant d'être tranché, un pain de viande, encore appelé "barre de viande", se présente sous la forme d'un bloc allongé présentant une section dite en demi-lune et est enveloppé dans une poche en matière plastique.

US 4 219 299 divulgue un procédé et un dispositif pour un produit alimentaire correspondant au préambule de la revendication 1 respectivement de la revendication 10.

Le tranchage du pain de viande nécessite d'abord que la poche soit retirée. A cet effet, on connaît un procédé pour retirer la poche enveloppant le pain de viande qui consiste, pour un manutentionnaire, à recevoir un pain de viande emballé, à le retourner de manière à le positionner sur sa surface circulaire, à couper la poche le long de la surface plane, à sortir le pain de viande de la poche par manipulation du pain de viande et de la poche, à diriger le pain de viande ainsi déballé vers un poste de tranchage ultérieur et à déposer la poche dans une poubelle.

Un tel procédé est très éprouvant pour le manutentionnaire du fait du poids du pain de viande et pose le problème de la contamination du pain de viande par le manutentionnaire.

Un objet de la présente invention est de proposer un procédé pour retirer la poche d'un pain de viande qui ne présente pas les inconvénients de l'état de la technique.

A cet effet, est proposé un procédé pour retirer une poche enveloppant un pain de produit alimentaire correspondant à la revendication 1.

Selon un mode de réalisation particulier, l'étape de découpage comprend une phase de découpage d'une incision dans au moins l'une des extrémités de la poche en continuité avec l'incision inférieure.

Selon un mode de réalisation particulier, l'étape de découpage comprend une phase de découpage d'une incision verticale dans chaque extrémité de la poche en continuité avec l'incision inférieure, et une phase de découpage d'une incision supérieure s'étendant dans une direction parallèle à la direction longitudinale dudit pain de produit alimentaire et dans la paroi supérieure de la poche située sur le pain de produit alimentaire en continuité avec les incisions verticales.

Avantageusement, l'étape de tirage consiste en un soulèvement des moyens d'accrochage,

Avantageusement, l'étape de tirage consiste, pour chaque paroi latérale, en un déplacement des moyens d'accrochage dans la direction normale à ladite paroi latérale et orientée vers l'extérieur du pain de produit alimentaire.

Avantageusement, l'étape de positionnement s'effectue préalablement à l'étape de découpage.

Avantageusement, le procédé comprend, postérieurement à l'étape de tirage de la poche, une étape de positionnement des moyens d'accrochage au-dessus d'une poubelle, et une étape de relâchement des moyens d'accrochage.

Avantageusement, lorsque les moyens d'accrochage sont constitués de moyens formant mâchoires et de moyens formant ventouses l'étape d'accrochage consiste en une étape d'aspiration de premières zones des parois latérales de la poche par lesdites ventouses, puis en une étape de fermeture des mâchoires sur des deuxièmes zones des parois latérales de la poche, voisines d'au moins une des premières zones.

Avantageusement, le procédé comprend, préalablement à l'étape de découpage, une étape d'injection d'air ou de gaz inerte à l'intérieur de la poche.

L'invention propose également un dispositif pour retirer une poche enveloppant un pain de produit alimentaire correspondant à la revendication 10.

Selon un mode de réalisation particulier, le dispositif de découpage est également prévu pour réaliser une incision verticale dans au moins l'une des extrémités de la poche en continuité avec l'incision inférieure.

Selon un mode de réalisation particulier, le dispositif de découpage est également prévu pour réaliser une incision verticale dans chaque extrémité de la poche en continuité avec l'incision inférieure, et une incision supérieure s'étendant dans une direction parallèle à la direction longitudinale dudit pain de produit alimentaire et dans la paroi supérieure de la poche située sur le pain de produit alimentaire en continuité avec les incisions verticales.

Avantageusement, le premier élément porteur est mobile selon une direction verticale au-dessus du pain de produit alimentaire.

Avantageusement, le premier élément porteur est mobile de sorte que, pour chaque paroi latérale, les moyens d'accrochage se déplacent dans la direction normale à ladite paroi latérale et orientée vers l'extérieur du pain de produit alimentaire.

Avantageusement, le dispositif de découpage comprend :
- un moyen de découpe prévu pour réaliser les incisions,
- un moyen de support pendulaire supportant le moyen de découpe sur l'une de ses extrémités désaxées par rapport à son axe de rotation,
- un moyen d'activation prévu pour activer le moyen de découpe,
- un moyen de mise en pression prévu pour agir sur une autre extrémité du moyen de support pendulaire, également désaxée par rapport à son axe de rotation, afin de mettre le moyen de découpe en pression contre la poche, et
- un moyen de déplacement portant les moyens précédents et prévu pour se déplacer parallèlement à la direction longitudinale du pain de produit alimentaire.

Avantageusement, le moyen de découpe comprend une lame circulaire tranchante et une garde circulaire coaxiale avec la lame.

Avantageusement, le rayon de la lame est supérieur au rayon de la garde et la différence entre les deux rayons est légèrement supérieure à l'épaisseur du film constituant la poche.

Avantageusement, le dispositif d'accrochage et de tirage comprend :
- un premier ensemble de plusieurs bras positionnés sur l'un des côtés du pain de produit alimentaire et dont l'extrémité libre de chacun d'eux porte au moins l'un des moyens d'accrochage,
- un deuxième ensemble de plusieurs bras positionnés sur l'autre côté du pain de produit alimentaire et dont l'extrémité libre de chacun d'eux porte au moins l'un des moyens d'accrochage, et
- un dispositif d'activation prévu entre le premier élément porteur et les bras pour faire passer les bras d'une position d'attente dans laquelle les moyens d'accrochage ne sont pas en contact avec la poche à une position d'accrochage dans laquelle les moyens d'accrochage sont en contact avec la poche.

Avantageusement, le dispositif d'accrochage et de tirage comprend un troisième ensemble de plusieurs bras fixés au premier élément porteur et dont l'extrémité libre de chacun d'eux porte au moins un moyen d'accrochage prévu pour s'accrocher sur la face supérieure de la poche.

Avantageusement, chaque moyen d'accrochage prend la forme d'une ventouse, d'une paire de mâchoires ou d'une combinaison de ces éléments.

Avantageusement, chaque paire de mâchoires est disposée au voisinage d'une ventouse de manière à ce que le pli de la poche formé par l'aspiration de ladite ventouse se trouve entre les deux mâchoires de ladite paire.

Avantageusement, les surfaces des moyens d'accrochage formant mâchoires, qui viennent serrer la poche, sont striées.

Avantageusement, le bord de chaque mâchoire venant en contact avec la poche est muni d'au moins une pointe prévue pour pénétrer dans la poche.

Avantageusement, le dispositif de transfert comprend :
- un deuxième élément porteur mobile verticalement au-dessus du pain de produit alimentaire,
- au moins un ensemble de bras dont l'extrémité libre de chacun d'eux porte au moins un moyen de soutien prévu pour se positionner sous le pain de produit alimentaire déballé, et
- un dispositif d'activation prévu entre le deuxième élément porteur et les bras pour faire passer les bras d'une position d'attente dans laquelle les moyens de soutien ne sont pas en dessous dudit pain de produit alimentaire à une position de soulèvement dans laquelle les moyens de soutien sont en dessous dudit pain de produit alimentaire.

Avantageusement, le premier élément porteur et le deuxième élément porteur forment un unique élément.

Avantageusement, le dispositif pour retirer la poche comprend un dispositif d'injection d'air ou d'un gaz inerte prévu pour injecter respectivement de l'air ou du gaz inerte à l'intérieur de la poche.

Avantageusement, le dispositif de réception comprend des parois formant butée et le dispositif d'injection d'air ou de gaz inerte est fixé sur les parois formant butée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en perspective d'un dispositif de découpage de la poche d'un pain de viande selon l'invention,
les Figs. 2 à 5 représentent différentes étapes du découpage de la poche du pain de viande,
la Fig. 6 représente une vue, dans le prolongement du pain de viande, d'un dispositif d'accrochage de la poche du pain de viande selon l'invention dans une position d'attente,
la Fig. 7 représente une vue du dispositif d'accrochage dans une position d'accrochage,
les Figs. 8 à 10 représentent différentes étapes de l'accrochage de la poche du pain de viande,
la Fig. 11 représente une vue du dispositif d'accrochage après retrait de la poche, et
la Fig. 12 représente une vue d'un dispositif de transfert du pain de viande déballé.

Selon l'invention, un dispositif pour retirer une poche enveloppant un pain de viande comprend :
- un dispositif de réception du pain de viande emballé,
- un dispositif de découpage de la poche du pain de viande,
- un dispositif d'accrochage et de tirage de la poche ainsi découpée, et
- un dispositif de transfert du pain de viande déballé.

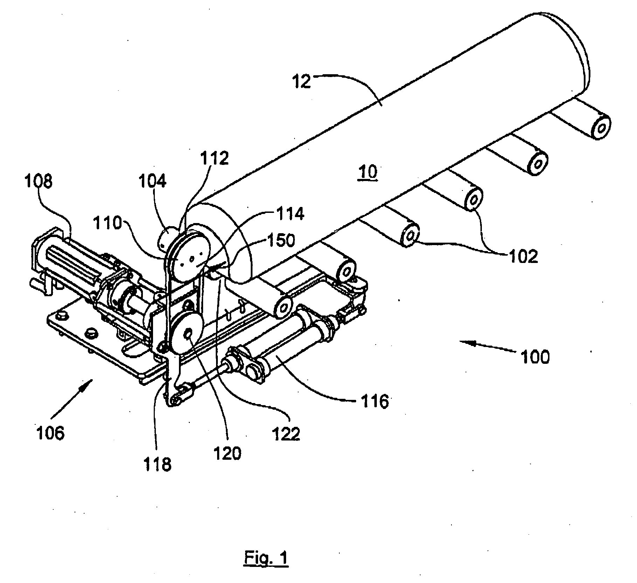

La Fig. 1 montre un dispositif de découpage 100 d'une poche 12 enveloppant un pain de viande 10. Le pain de viande 10 se présente, ici, sous la forme d'un bloc allongé présentant une section dite en demi-lune présentant une face inférieure sur laquelle il repose et une face circulaire orientée vers le haut et des parois latérales formant les flancs du pain de viande 10 et s'étendant de chaque côté du pain de viande 10 dans un plan sensiblement vertical. La section du pain de viande peut prendre une autre forme et l'invention n'est pas limitée à la forme en demi-lune.

La poche 12 est un film en matière plastique recouvrant le pain de viande 10.

Dans la suite de la description, le terme "longitudinal" se rapporte à une direction parallèle à la plus grande dimension du pain de viande et le terme "latéral" se rapporte à une direction orthogonale à la direction longitudinale.

Le dispositif de réception du pain de viande 10 emballé est constitué d'un premier ensemble de rouleaux 102 et d'un deuxième ensemble de rouleaux 104 sur lesquels viennent se placer le pain de viande 10 et sa poche 12. La présence de rouleaux 102, 104 permet de limiter le frottement entre la poche 12 et lesdits rouleaux 102 et 104 lors du retrait de la poche 12 qui est décrit ci-après.

Chaque rouleau 102 du premier ensemble est de préférence coaxial avec l'un des rouleaux 104 du deuxième ensemble. Les deux ensembles sont distants l'un de l'autre de sorte que les rouleaux 102 et 104 sont séparés par un espace libre 122. L'ensemble des espaces libres 122 ainsi défini forme une rainure sans obstacle entre les rouleaux 102 du premier ensemble et les rouleaux 104 du deuxième ensemble.

Le pain de viande 10 emballé dans sa poche 12 arrive sur le dispositif de réception sur sa face plane et son plan vertical médian passe sensiblement au milieu de ladite rainure et il est arrêté par des parois formant butée et s'étendant dans un plan perpendiculaire à la direction longitudinale du pain de viande 10.

Selon le mode de réalisation particulier de l'invention décrit ici, le dispositif de découpage 100 est prévu pour réaliser, par déplacement parallèlement à la direction longitudinale dudit pain de produit alimentaire 10, une incision inférieure s'étendant dans une direction parallèle à la direction longitudinale dudit pain de viande 10 et dans la paroi inférieure de la poche 12 située sous le pain de viande 10 et une incision verticale dans au moins l'une des extrémités verticales de la poche 12 en continuité avec l'incision inférieure. La ou chaque incision verticale s'étend, de préférence, sur environ la moitié de la hauteur du pain de viande 10. Ici, le dispositif de découpage 100 est prévu pour réaliser une incision verticale dans chaque extrémité verticale de la poche 12.

Le dispositif de découpage 100 comprend :
- un moyen de déplacement 106,
- un moyen de support pendulaire 118,
- un moyen de découpe 110,
- un moyen d'activation 108, et
- un moyen de mise en pression 116 prévu pour mettre le moyen de découpe 110 en pression contre la poche 12.

Le moyen de déplacement 106 prend ici la forme d'un chariot mobile, par exemple sur des rails, en translation parallèlement à la direction longitudinale du pain de viande 10. Le chariot 106 porte le moyen de support pendulaire 118, le moyen de découpe 110, le moyen d'activation 108 et le moyen de mise en pression 116.

Le moyen d'activation 108 est ici un moteur qui est fixé directement sur le chariot 106 et dont l'axe moteur 120 est orienté selon une direction transversale.

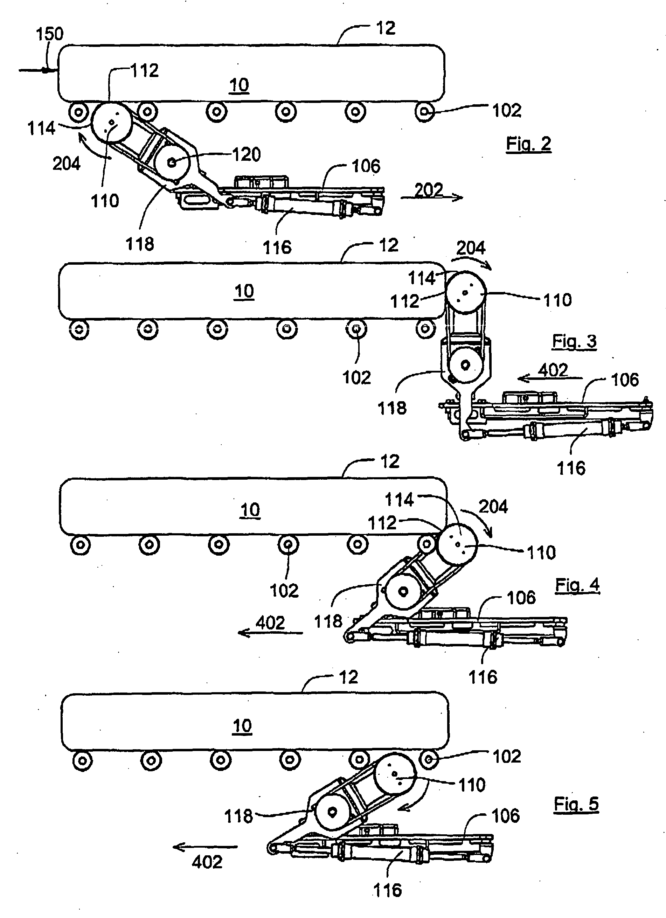

Le moyen de support pendulaire 118 est monté mobile en rotation autour de son axe de rotation, qui est ici l'axe 120 du moteur 108 et peut donc pivoter autour de cet axe moteur 120 entre une position verticale telle que représentée sur la Fig. 1 et la Fig. 3 et des positions angulaires telles que représentées sur les Figs. 2, 4 et 5.

Une extrémité du moyen de support pendulaire 118, qui est désaxée par rapport à l'axe moteur 120, porte le moyen de découpe 110 qui prend ici la forme d'une lame circulaire 112 dont la périphérie est tranchante et d'une garde circulaire 114 coaxiale avec la lame 112. Le rayon de la lame 112 est supérieur au rayon de la garde 114 et la différence entre les deux rayons est légèrement supérieure à l'épaisseur du film constituant la poche 12. La différence entre les rayons doit être suffisante pour découper le film mais ne pas endommager le pain de viande 10 en le découpant de manière trop importante.

La lame circulaire 112 et la garde 114 sont activées par le moteur 108 et une courroie qui transmet le mouvement de rotation de l'axe moteur 120 à la lame 112 et à la garde 114. La lame 112 et la garde 114 sont disposées et dimensionnées de manière à pouvoir passer dans la rainure sans obstacle entre les rouleaux 102 et 104.

Le moyen de mise en pression 116 est fixé, d'une part, au chariot 106 et, d'autre part, à une autre extrémité du moyen de support pendulaire 118, qui est également désaxée par rapport à l'axe moteur 120. Le moyen de mise en pression 116 agit sur cette autre extrémité afin de mettre le moyen de découpe 110 en pression contre la poche 12. Le moyen de mise en pression 116 prend ici la forme de deux vérins solidaires dont l'extrémité de l'un est fixée au moyen de support pendulaire 118 et l'extrémité de l'autre est fixée au chariot 106.

Les différentes étapes de découpage de la poche 12 vont être décrites à partir des Figs. 1 à 5 qui représentent une séquence particulière des étapes de découpage du présent mode de réalisation de l'invention.

Avant l'arrivée du pain de viande 10, le moyen de support pendulaire 118 est en position verticale, la lame 112 et la garde 114 sont alors disposées au-dessus des rouleaux 102 et 104. La lame 112 est amenée en butée contre l'une des extrémités du pain de viande emballé 10 et la poche 12 à peu près à mi-hauteur du pain de viande 10.

La lame 112 et la garde 114 sont mises en rotation (flèche 204 de la Fig. 2) afin de découper l'extrémité de la poche 12 en réalisant une première incision verticale. Le sens de rotation de la lame 112 et de la garde peut être inversé.

Le chariot 106 est ensuite déplacé (flèche 202 de la Fig. 2). Sous l'action du contact entre le pain de viande 10 et le moyen de découpe 110, le moyen pendulaire 118 pivote de manière à ce que la lame 112 et la garde 114 viennent réaliser l'incision longitudinale inférieure dans la poche 12 sous le pain de viande 10 en continuité avec la première incision verticale. L'incision longitudinale inférieure est ainsi réalisée du côté de la face plane du pain de viande 10.

Lorsque la lame 112 et la garde 114 arrivent au bout du pain de viande 10, le moyen pendulaire se redresse en position verticale (Fig. 3) sous l'effet du moyen de mise en pression 116. Le chariot 106 est alors déplacé en sens inverse (flèche 402 de la Fig. 3) de manière à ce que la lame 112 et la garde 114 viennent en contact contre l'autre extrémité verticale du pain de viande emballé 10 à environ mi-hauteur de manière à réaliser une deuxième incision verticale dans la poche 12.

Le déplacement du chariot 106 est poursuivi (flèche 402 de la Fig. 4) de manière à ce que la lame 112 et la garde 114, toujours en pression contre la poche 12 du pain de viande 10, continuent la deuxième incision verticale jusqu'à ce que celle-ci rejoigne l'incision inférieure. Afin de rejoindre l'incision inférieure, la deuxième incision verticale peut être poursuivie sous le pain de jambon 10 et prend alors la forme d'une autre incision inférieure.

Le moyen de mise en pression 116 peut alors dégager la lame 112 de la poche 12 en accentuant la position angulaire du moyen pendulaire 118 (Fig. 5).

Le mouvement du chariot (flèche 402 de la Fig. 5) est poursuivi jusqu'au retour du moyen de découpe 110 dans sa position initiale de la Fig. 1.

Du fait que les incisions ne sont pas réalisées lors d'un seul passage du moyen de découpe 110, la continuité entre les différentes incisions peut être assurée par la mise en place d'un moyen de découpe transversal. Le moyen de découpe transversal est prévu pour découper la poche 12 à un endroit où au moins deux incisions sont réalisées, c'est-à-dire qu'elles sont distantes l'une de l'autre et sensiblement parallèles l'une à l'autre. Le moyen de découpe transversal est prévu pour réaliser une incision qui s'étend, par exemple, dans une direction sensiblement perpendiculaire à la direction longitudinale dudit pain de viande 10 et dans la paroi inférieure de la poche 12 située sous le pain de viande 10.

La différence de rayon entre la lame 112 et la garde 114 est telle que la garde 114 vient appuyer contre le pain de viande 10 par l'intermédiaire de la poche 12 et que la lame 112 découpe la poche 12 sans entamer de manière excessive le pain de viande 10.

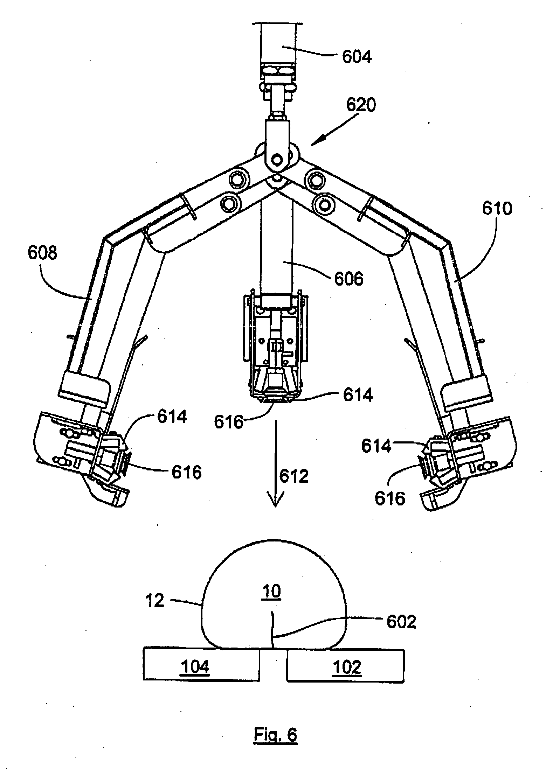

Le dispositif d'accrochage et de tirage de la poche 12 du pain de viande 10 va maintenant être décrit à l'aide des Figs. 6 à 11.

Le dispositif d'accrochage et de tirage comprend des moyens d'accrochage 614, 616 prévus pour se positionner contre les parois latérales de la poche 12 qui sont disposées de part et d'autre de l'incision longitudinale inférieure, pour s'accrocher auxdites parois et pour tirer sur la poche 12.

Le dispositif d'accrochage et de tirage comprend un premier ensemble de plusieurs bras 608, un deuxième ensemble de plusieurs bras 610, un premier élément porteur 604 et un dispositif d'activation 620.

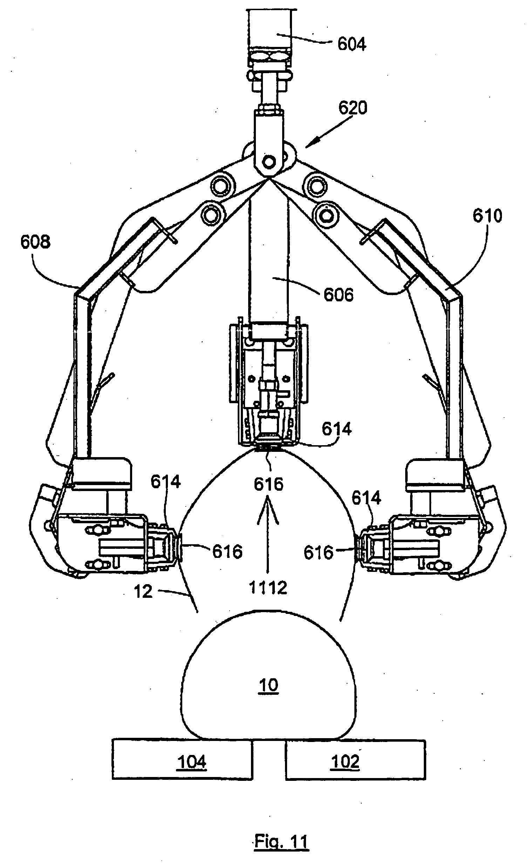

L'élément porteur 604 se présente sous la forme d'un châssis mobile en translation verticale (flèche 612 de la Fig. 6 et flèche 1112 de la Fig. 11) et disposé au-dessus du pain de viande 10 dont la poche 12 vient d'être découpée et présente une incision 602 dans sa partie inférieure.

Le premier ensemble de bras 608 est positionné sur l'un des côtés transversaux du pain de viande 10, à gauche sur la Fig. 6 et le deuxième ensemble de bras 610 est positionné sur l'autre côté transversal du pain de viande 10, à droite sur la Fig. 6. Le premier ensemble de bras 608 et le deuxième ensemble de bras 610 constituent chacun l'une des mâchoires qui vient enserrer le pain de viande 10 et sa poche 12 comme cela est expliqué ci-après.

Chaque ensemble de bras comprend une pluralité de bras 608, 610 qui sont répartis sur la longueur du pain de viande 10 afin d'assurer un bon accrochage et un bon tirage de la poche 12 afin d'assurer le retrait de la poche 12 comme cela est expliqué ci-après.

Chaque bras 608, 610 est monté sur l'élément porteur 604 par l'intermédiaire du dispositif d'activation 620.

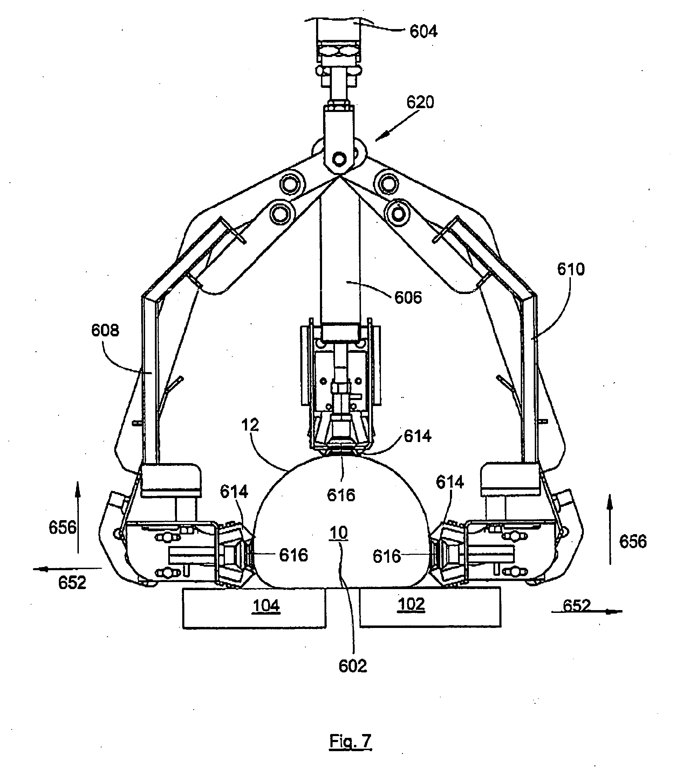

Le dispositif d'activation 620 permet d'écarter ou de rapprocher les bras 608 et 610, par exemple, par rotation de chacun d'eux. C'est-à-dire que le dispositif d'activation 620 est prévu pour faire passer les bras 608 et 610 d'une position d'attente dans laquelle les moyens d'accrochage 614, 616 ne sont pas en contact avec la poche 12 à une position d'accrochage dans laquelle les moyens d'accrochage 614, 616 sont en contact avec la poche 12. En position d'attente (Fig. 6), les bras 608 et 610 sont écartés et le pain de viande 10 et sa poche 12 peuvent passer entre les bras 608 et 610 sans les toucher. En position d'accrochage (Fig. 7), les bras 608 et 610 sont rapprochés et leurs extrémités libres viennent en contact avec les flancs du pain de viande 10 afin de l'enserrer avec sa poche 12.

Chaque bras 608, 610 porte, à son extrémité libre prévue pour venir en contact avec la paroi latérale de la poche 12 correspondante, au moins l'un des moyens d'accrochage 614, 616.

Chaque moyen d'accrochage 614, 616 est prévu pour accrocher la poche 12, et il peut prendre, par exemple, la forme d'une ventouse 616, d'une paire de mâchoires 614 ou d'une combinaison de ces éléments.

Le retrait de la poche 12 comprend une étape de descente du dispositif d'accrochage et de tirage (flèche 612 de la Fig. 6), une étape de serrage des bras 608 et 610 sur les parois latérales du pain de viande 10 et de sa poche 12 (Fig. 7), une étape d'accrochage des parois latérales de la poche 12 par les moyens d'accrochage 614 et 616 et une étape de tirage de la poche 12 par les moyens d'accrochage 614, 616 du dispositif d'accrochage et de tirage (flèche 1112 de la Fig. 11) auquel est accrochée la poche 12. Le pain de viande 10 reste sur les rouleaux 102 et 104 et se libère de sa poche 12 en passant à travers l'incision 602. Le pain de viande 10 reste donc immobile lors du processus de retrait de sa poche 12 et ne risque donc pas de s'abîmer. En outre, le procédé de retrait de la poche 12 ne nécessite aucune action de la part d'un manutentionnaire. Ici le tirage de la poche 12 correspond à un levage du dispositif d'accrochage et de tirage, c'est-à-dire un déplacement vertical au-dessus du pain de viande 12.

Le dispositif d'accrochage et de tirage peut ensuite être déplacé, par exemple par déplacement latéral, au-dessus d'une poubelle où la poche 12 est déposée par relâchement des moyens d'accrochage 614 et 616. Un dispositif de transfert vient ensuite transférer le pain de viande 10 déballé vers un poste de traitement ultérieur, par exemple le tranchage.

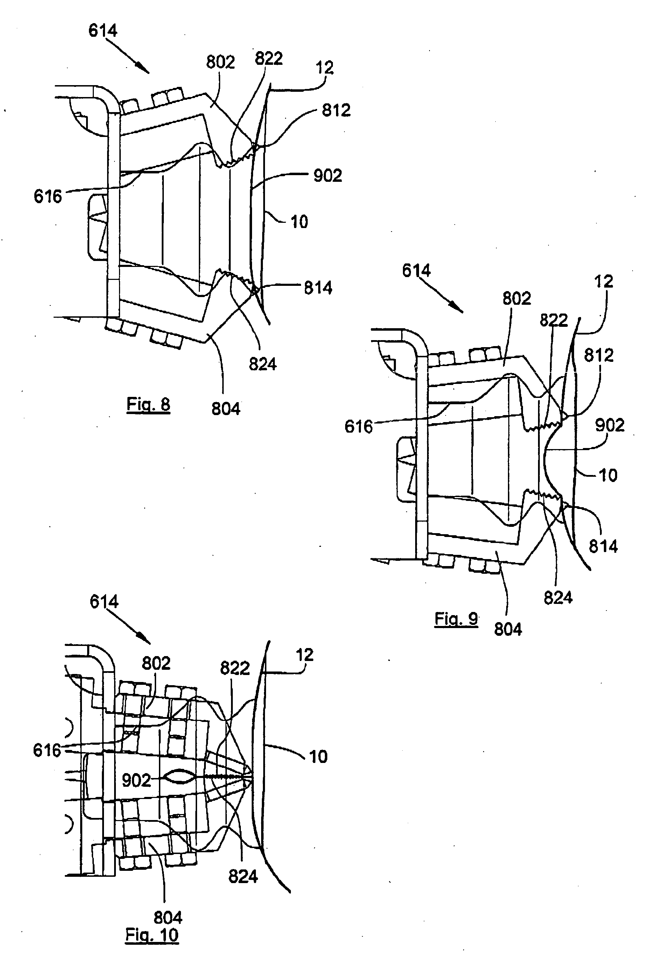

Lorsque un moyen d'accrochage formant ventouse 616 vient en contact avec le film au niveau d'une première zone de la paroi latérale de la poche 12 et l'aspire, un pli 902 (Fig. 8) se forme de part et d'autre de la ventouse. Ce pli s'étend longitudinalement sur une certaine distance le long du pain de viande 10.

Les Figs. 8 à 10 montrent le fonctionnement d'un moyen d'accrochage 614 formant mâchoires et qui est disposé au voisinage d'un moyen d'accrochage 616 formant ventouse. Le moyen d'accrochage 614 formant mâchoires est constitué d'une mâchoire inférieure 804 et d'une mâchoire supérieure 802. Le pli 902 se trouve entre les deux mâchoires 802, 804 et vient en contact contre le bord de la mâchoire supérieure 802 et contre le bord de la mâchoire inférieure 804 comme cela est montré sur la Fig. 8. La fermeture des mâchoires 614 s'effectue ainsi sur des deuxièmes zones des parois latérales de la poche 12, voisines d'au moins une des premières zones.

Lorsque les mâchoires 802 et 804 se rapprochent, le pli 902 s'accentue comme cela est montré sur la Fig. 9 et vient se loger entre les deux mâchoires 802 et 804 lorsque celles-ci sont entièrement serrées comme cela est montré sur la Fig. 10. Le maintien du film entre les mâchoires 802 et 804 est d'autant mieux assuré que les surfaces 822 et 824 des mâchoires 802 et 804 qui viennent serrer le pli 902 sont striées.

On dit qu'un moyen d'accrochage 614 formant mâchoires est disposé au voisinage d'un moyen d'accrochage 616 formant ventouses lorsque le pli 902 créé est tel qu'il s'étend entre la mâchoire inférieure 804 et la mâchoire supérieure 802 dudit moyen d'accrochage 614 formant mâchoires.

Afin de faciliter encore plus l'accrochage du film formant la poche 12 par les moyens d'accrochage 614 formant mâchoires, le bord de chaque mâchoire 802, 804 qui vient en contact contre la poche 12 est muni d'au moins une pointe respectivement 812, 814 qui est prévue pour pénétrer dans la poche 12 lors du resserrement des mâchoires 802 et 804 comme cela est montré sur la Fig. 8.

Lorsque les mâchoires 802 et 804 se rapprochent, la présence des pointes 812 et 814 empêche tout glissement des mâchoires 802 et 804 sur la poche 12. Le film constituant la poche 12 est ainsi tiré, accentuant ainsi la formation du pli 902 entre les mâchoires 802 et 804 comme cela est montré sur la Fig. 9.

Dans un autre mode de réalisation de l'invention, chaque moyen d'accrochage peut être constitué d'une ou plusieurs ventouses et d'une ou plusieurs paires de mâchoires. Par exemple, il est possible de prévoir à l'extrémité de chaque bras 608, 610, une ventouse placée entre deux paires de mâchoires.

Bien que le relâchement de l'aspiration de chaque ventouse 614 soit prévu au-dessus de la poubelle, il peut se faire dès que les mâchoires 802 et 804 serrent le film.

Afin d'améliorer le maintien de la poche 12 lors de son enlèvement par tirage, le dispositif d'accrochage et de tirage peut comprendre un troisième ensemble de plusieurs bras 606. Chacun de ces bras 606 est fixé à l'élément porteur 604 et s'étend verticalement au-dessus du pain de viande 10. Comme pour les deux ensembles de bras 608 et 610 déjà décrits, l'extrémité libre de chacun de bras 606 du troisième ensemble est munie d'un moyen d'accrochage 614, 616 formant ventouses et/ou mâchoires. Le troisième ensemble de bras 606 s'abaisse en même temps que l'élément porteur 604 (Fig. 6) et chaque moyen d'accrochage 614, 616 vient en contact avec la face supérieure de la poche 12 située sur la partie supérieure du pain de viande 10.

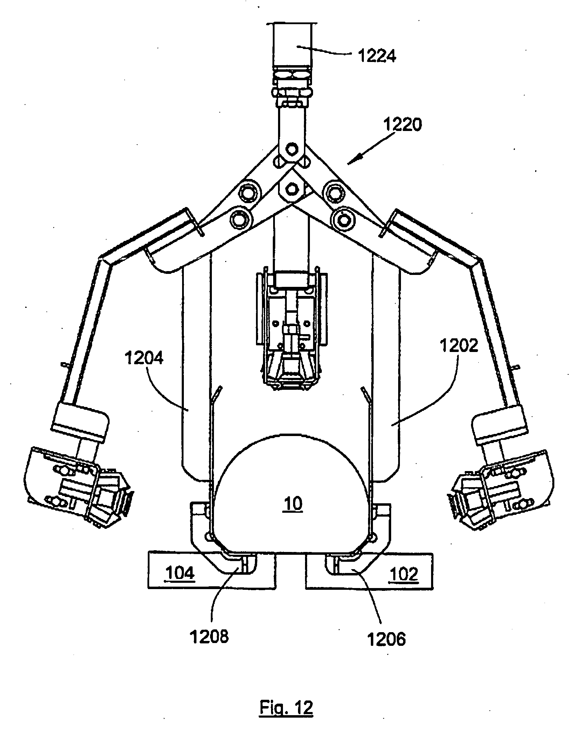

Le dispositif de transfert du pain de viande 10 déballé va maintenant être décrit à l'aide de la Fig. 12.

Le dispositif de transfert est disposé au-dessus du pain de viande 10 déballé et comprend un premier ensemble de bras 1204, un deuxième ensemble de bras 1202, un deuxième élément porteur 1224 mobile verticalement au-dessus du pain de viande 10 et un dispositif d'activation 1220.

Le premier ensemble de bras 1204 est positionné sur l'un des côtés du pain de viande 10, à gauche sur la Fig. 12 et le deuxième ensemble de bras 1202 est positionné sur l'autre côté du pain de viande 10, à droite sur la Fig. 12. Le premier ensemble de bras 1204 et le deuxième ensemble de bras 1202 constituent chacun l'une des mâchoires qui vient enserrer le pain de viande déballé 10 comme cela est expliqué ci-après.

Chaque ensemble de bras comprend une pluralité de bras 1204, 1202 qui sont répartis sur la longueur du pain de viande 10. Chaque bras 1204, 1202 comporte, à son extrémité libre prévue pour venir en contact avec le pain de viande 10, un moyen de soutien 1208, 1206.

Chaque bras 1204, 1202 est monté sur le deuxième élément porteur 1224 par l'intermédiaire du dispositif d'activation 1220. De préférence, le deuxième élément porteur 1224 et le premier élément porteur 604 forment un unique élément.

Le dispositif d'activation 1220 permet d'écarter ou de rapprocher les bras 1202 et 1204, par exemple, par rotation de chacun d'eux. Le dispositif d'activation 1220 est prévu pour faire passer les bras 1202, 1204 d'une position d'attente dans laquelle les moyens de soutien 1206, 1208 ne sont pas en dessous du pain de viande 10 à une position de soulèvement dans laquelle les moyens de soutien 1206, 1208 sont en dessous dudit pain de viande 10. En position d'attente, les bras 1202 et 1204 sont écartés, le pain de viande 10 peut passer entre les bras 1202 et 1204 sans les toucher. En position de soulèvement, les bras 1202 et 1204 et donc leurs extrémités libres sont rapprochés et viennent en contact avec les flancs du pain de viande 10 afin de l'enserrer.

Le nombre et la répartition des bras 1202, 1204, et des moyens de soutien 1208, 1206 sont tels que le soulèvement du pain de viande déballé 10 n'engendre aucune détérioration de ce dernier.

Chaque moyen de soutien 1206, 1208 peut prendre, par exemple, la forme d'une palette et est prévu, en position de soulèvement, pour se positionner sous le pain de viande 10. Le positionnement et les dimensions de chaque moyen de soutien 1206, 1208 sont tels qu'ils peuvent passer respectivement entre deux rouleaux 104 du deuxième ensemble ou entre deux rouleaux 102 du premier ensemble.

Lorsque les moyens de soutien 1206 et 1208 sont positionnés sous le pain de viande 10, l'élément porteur 1224 soulève les moyens de soutien 1206 et 1208 et donc le pain de viande 10 afin de le déplacer, par exemple, par déplacement latéral, et de le déposer sur un autre dispositif d'entraînement, comme par exemple, un transporteur à rouleaux ou à bande d'un dispositif de tranchage.

Le procédé pour retirer la poche 12 du pain de viande 10 qui est mis en oeuvre par le dispositif qui est décrit ci-dessus comprend :
- une étape de réception d'un pain de viande 10,
- une étape de découpage, à l'aide du dispositif de découpage 100, d'une incision inférieure s'étendant dans une direction parallèle à la direction longitudinale dudit pain de viande 10 et dans la paroi inférieure de la poche 12 située sous le pain de viande 10, par déplacement du dispositif de découpage 100,
- une étape de positionnement de moyens d'accrochage 614 et 616 contre les parois latérales de la poche 12 qui sont disposées de part et d'autre de l'incision inférieure,
- une étape d'accrochage des moyens d'accrochage 614 et 616 sur les parois latérales de la poche 12,
- une étape de tirage de la poche 12 par lesdits moyens d'accrochage 614 et 616 dans une direction s'étendant, pour la paroi latérale considérée, entre la direction normale à ladite paroi latérale et orientée vers l'extérieur du pain de viande 10 (flèches 652 et 654 de la Fig. 7) et la direction normale à la paroi inférieure de la poche 12 et orientée vers le haut (flèche 656 de la Fig. 7), et
- une étape de transfert du pain de viande 10 vers un poste de traitement ultérieur.

Dans le mode de réalisation de l'invention décrit ici, l'étape de découpage comprend une phase de découpage d'une incision verticale dans au moins l'une des extrémités de la poche 12 en continuité avec l'incision inférieure et, en particulier, dans chacune d'elles.

L'étape de tirage de la poche 12 correspond ici à un soulèvement des moyens d'accrochage 614 et 616 dans une direction sensiblement verticale.

Afin d'évacuer la poche 12, l'étape de tirage de la poche 12 est suivie d'une étape de positionnement des moyens d'accrochage 614, 616 au-dessus d'une poubelle, et une étape de relâchement des moyens d'accrochage 614, 616.

Lorsque les moyens d'accrochage sont constitués de moyens formant mâchoires 614 et de moyens formant ventouses 616, l'étape d'accrochage consiste en une étape d'aspiration des premières zones des parois latérales de la poche 12 par lesdites ventouses 616, puis en une étape de fermeture des mâchoires 614 sur des deuxièmes zones des parois latérales de la poche 12, voisines d'au moins une des premières zones.

Bien entendu, la présente invention n'est pas limitée aux exemples et modes de réalisation décrits et représentés, mais elle est susceptible de nombreuses variantes accessibles à l'homme de l'art.

Par exemple, le dispositif de transfert a été décrit comme comportant deux ensembles de palettes venant de part et d'autre du pain de viande déballé afin de le soulever, mais l'invention s'applique de la même manière si le dispositif de transfert comporte un seul ensemble de palettes. Chaque palette est d'une longueur suffisante pour porter le pain de viande après leur mise en position sous la face plane du pain de viande.

Par exemple, afin de maintenir le pain de viande 10 et sa poche 12 durant le découpage de la poche 12, l'étape de positionnement des moyens d'accrochage 614 et 616 s'effectue préalablement à l'étape de découpage.

Dans un autre mode de réalisation de l'invention, le dispositif de découpage 100 est prévu pour réaliser uniquement une incision inférieure s'étendant dans une direction parallèle à la direction longitudinale dudit pain de viande 10 et dans la paroi inférieure de la poche 12 située sous le pain de viande 10. Le tirage de la poche 12 s'effectue alors également dans une direction sensiblement verticale (flèche 656 de la Fig. 7) par déplacement du premier élément porteur 604 verticalement au-dessus du pain de viande 10. L'incision inférieure s'étend sur une longueur suffisante pour permettre le passage du pain de viande 10 lors du tirage de la poche 12 et ceci sans que le pain de viande 10 ne soit soulevé. De préférence, l'incision inférieure s'étend donc sur toute la longueur du pain de viande 10.

Dans un autre mode de réalisation de l'invention, le dispositif de découpage 100 est prévu pour réaliser, au cours de l'étape de découpage de la poche 12, une incision inférieure conforme à la précédente, une incision verticale dans chaque extrémité de la poche 12 en continuité avec l'incision inférieure, et une incision supérieure s'étendant dans une direction parallèle à la direction longitudinale dudit pain de viande 10 et dans la paroi supérieure de la poche 12 située sur le pain de viande 10 en continuité avec les incisions verticales. Ainsi la poche 12 est découpée en deux parties qui sont disposées de part et d'autre du plan de découpage de la poche 12. Le tirage de la poche 12 peut alors s'effectuer par tirage, pour chaque paroi latérale, dans la direction normale à ladite paroi latérale et orientée vers l'extérieur du pain de viande 10 (flèche 652 de la Fig. 7). Le premier élément porteur 604 est alors mobile de sorte que, pour chaque paroi latérale, les moyens d'accrochage 614, 616 se déplacent dans ladite direction normale.

D'une manière générale, le premier élément porteur 604 solidaire des moyens d'accrochage 614 et 616 est mobile dans une direction s'étendant, pour la paroi latérale considérée, entre la direction normale à ladite paroi latérale (flèches 652 et 654 de la Fig. 7) et orientée vers l'extérieur du pain de viande 10 et la direction normale à la paroi inférieure de la poche 12 et orientée vers le haut (flèche 656 de la Fig. 7).

Pour faciliter le décollement de la poche 12 du pain de viande 10, de l'air ou un gaz inerte est injecté à l'intérieur de la poche 12 avant son découpage. Une étape d'injection d'air ou de gaz inerte à l'intérieur de la poche 12 est ainsi mise en oeuvre préalablement à l'étape de découpage. A cette fin, un dispositif d'injection d'air ou de gaz inerte 150, par exemple du type comprenant une aiguille creuse reliée à un compresseur ou une réserve d'air traité, est mis en place. Le dispositif d'injection d'air ou de gaz inerte 150 est, de préférence, fixé sur les parois formant butée. L'injection d'air ou de gaz inerte s'effectue par pénétration du dispositif d'injection d'air ou de gaz inerte 150, et, en particulier de l'aiguille creuse, dans la poche 12 et expulsion d'air ou de gaz inerte sous pression dans la poche 12. La pénétration du dispositif d'injection d'air ou de gaz inerte 150 dans la poche 12 est facilité par le fait que le pain de viande 10 est entraîné et mis en buté contre les parois formant butée et donc le dispositif d'injection d'air ou de gaz inerte 150.

Bien que l'invention ait été plus particulièrement décrite dans le cas d'un pain de viande, elle s'applique de la même manière dans le cas de tout type de pain de produit alimentaire conditionné dans une poche, comme par exemple les pains de fromage.

## Revendications

1. Procédé pour retirer une poche (12) enveloppant un pain de produit alimentaire (10) comprenant :
- une étape de réception du pain de produit alimentaire (10) enveloppé,
- une étape de découpage, à l'aide d'un dispositif de découpage (100),
- une étape de positionnement de moyens d'accrochage (614, 616) contre les parois latérales de la poche (12),
- une étape d'accrochage des moyens d'accrochage (614, 616) sur les parois latérales de la poche (12),
- une étape de tirage de la poche (12) par lesdits moyens d'accrochage (614, 616) dans une direction s'étendant, pour la paroi latérale considérée, entre la direction normale à ladite paroi latérale et orientée vers l'extérieur du pain de produit alimentaire (10) et la direction normale à la paroi inférieure de la poche (12) et orientée vers le haut,
- une étape de transfert du pain de produit alimentaire (10) vers un poste de traitement ultérieur, **caractérisé en ce que** l'étape de découpage est effectuée au moyen d'une incision inférieure s'étendant dans une direction parallèle à la direction longitudinale dudit pain de produit alimentaire (10) et dans la paroi inférieure de la poche (12) située sous le pain de produit alimentaire (10), par déplacement dudit dispositif de découpage (100).

2. Procédé selon la revendication 1, **caractérisé en ce que** l'étape de découpage comprend une phase de découpage d'une incision dans au moins l'une des extrémités de la poche (12) en continuité avec l'incision inférieure.

3. Procédé selon la revendication 1, **caractérisé en ce que** l'étape de découpage comprend une phase de découpage d'une incision verticale dans chaque extrémité de la poche (12) en continuité avec l'incision inférieure, et une phase de découpage d'une incision supérieure s'étendant dans une direction parallèle à la direction longitudinale dudit pain de produit alimentaire (10) et dans la paroi supérieure de la poche (12) située sur le pain de produit alimentaire (10) en continuité avec les incisions verticales.

4. Procédé selon la revendication 1 à 3, **caractérisé en ce que** l'étape de tirage consiste en un soulèvement des moyens d'accrochage (614, 616).

5. Procédé selon la revendication 3, **caractérisé en ce que** l'étape de tirage consiste, pour chaque paroi latérale, en un déplacement des moyens d'accrochage (614, 616) dans la direction normale à ladite paroi latérale et orientée vers l'extérieur du pain de produit alimentaire (10).

6. Procédé selon l'une des revendications 1 à 5, **caractérisé en ce que** ladite étape de positionnement s'effectue préalablement à l'étape de découpage.

7. Procédé selon l'une des revendications 1 à 6, **caractérisé en ce qu'**il comprend, postérieurement à l'étape de tirage de la poche (12), une étape de positionnement des moyens d'accrochage (614, 616) au-dessus d'une poubelle, et une étape de relâchement des moyens d'accrochage (614, 616).

8. Procédé selon l'une des revendications 1 à 7, **caractérisé en ce que** lorsque les moyens d'accrochage sont constitués de moyens formant mâchoires (614) et de moyens formant ventouses (616), l'étape d'accrochage consiste en une étape d'aspiration de premières zones des parois latérales de la poche (12) par lesdites ventouses (616), puis en une étape de fermeture des mâchoires (614) sur des deuxièmes zones des parois latérales de la poche (12), voisines d'au moins une des premières zones.

9. Procédé selon l'une des revendications 1 à 8, **caractérisé en ce qu'**il comprend, préalablement à l'étape de découpage, une étape d'injection d'air ou de gaz inerte à l'intérieur de la poche (12).

10. Dispositif pour retirer une poche (12) enveloppant un pain de produit alimentaire (10) comprenant :
- un dispositif de réception (102, 104) du pain de produit alimentaire (10) emballé,
- un dispositif de découpage (100) de la poche (12) du pain de produit alimentaire (10),
- un dispositif d'accrochage et de tirage de la poche (12) ainsi découpée, ledit dispositif d'accrochage comprenant des moyens d'accrochage (614, 616) prévus pour se positionner contre les parois latérales de la poche (12) et un premier élément porteur (604) solidaire desdits moyens d'accrochage (614, 616) et mobile dans une direction s'étendant, pour la paroi latérale considérée, entre la direction normale à ladite paroi latérale et orientée vers l'extérieur du pain de produit alimentaire (10) et la direction normale à la paroi inférieure de la poche (12) et orientée vers le haut, et
- un dispositif de transfert du pain de produit alimentaire (10) ainsi déballé
prévu pour le transférer vers un poste de traitement ultérieur, **caractérisé en ce que** la dispositif de découpage est prévu pour réaliser, par déplacement parallèlement à la direction longitudinale dudit pain de produit alimentaire (10), une incision inférieure s'étendant dans une direction parallèle à la direction longitudinale dudit pain de produit alimentaire (10) et dans la paroi inférieure de la poche (12) située sous le pain de produit alimentaire (10).

11. Dispositif selon la revendication 10, **caractérisé en ce que** le dispositif de découpage (100) est également prévu pour réaliser une incision verticale dans au moins l'une des extrémités de la poche (12) en continuité avec l'incision inférieure.

12. Dispositif selon la revendication 10, **caractérisé en ce que** le dispositif de découpage (100) est également prévu pour réaliser une incision verticale dans chaque extrémité de la poche (12) en continuité avec l'incision inférieure, et une incision supérieure s'étendant dans une direction parallèle à la direction longitudinale dudit pain de produit alimentaire (10) et dans la paroi supérieure de la poche (12) située sur le pain de produit alimentaire (10) en continuité avec les incisions verticales.

13. Dispositif selon l'une des revendications 10 à 12, **caractérisé en ce que** le premier élément porteur (604) est mobile selon une direction verticale au-dessus du pain de produit alimentaire (10).

14. Dispositif selon la revendication 12, **caractérisé en ce que** le premier élément porteur (604) est mobile de sorte que, pour chaque paroi latérale, les moyens d'accrochage (614, 616) se déplacent dans la direction normale à ladite paroi latérale et orientée vers l'extérieur du pain de produit alimentaire (10).

15. Dispositif selon l'une des revendications 10 à 14, **caractérisé en ce que** le dispositif de découpage (100) comprend :
- un moyen de découpe (110) prévu pour réaliser les incisions,
- un moyen de support pendulaire (118) supportant le moyen de découpe (110) sur l'une de ses extrémités désaxées par rapport à son axe de rotation (120),
- un moyen d'activation (108) prévu pour activer le moyen de découpe (110),
- un moyen de mise en pression (116) prévu pour agir sur une autre extrémité du moyen de support pendulaire (118), également désaxée par rapport à son axe de rotation (120), afin de mettre le moyen de découpe (110) en pression contre la poche (12), et
- un moyen de déplacement (106) portant les moyens précédents et prévu pour se déplacer parallèlement à la direction longitudinale du pain de produit alimentaire (10).

16. Dispositif selon la revendication 15, **caractérisé en ce que** le moyen de découpe (110) comprend une lame circulaire tranchante (112) et une garde circulaire (114) coaxiale avec la lame (112).

17. Dispositif selon la revendication 16, **caractérisé en ce que** le rayon de la lame (112) est supérieur au rayon de la garde (114) et la différence entre les deux rayons est légèrement supérieure à l'épaisseur du film constituant la poche (12).

18. Dispositif selon l'une des revendications 10 à 17, **caractérisé en ce que** le dispositif d'accrochage et de tirage comprend :
- un premier ensemble de plusieurs bras (608) positionnés sur l'un des côtés du pain de produit alimentaire (10) et dont l'extrémité libre de chacun d'eux porte au moins l'un des moyens d'accrochage (614, 616),
- un deuxième ensemble de plusieurs bras (610) positionnés sur l'autre côté du pain de produit alimentaire (10) et dont l'extrémité libre de chacun d'eux porte au moins l'un des moyens d'accrochage (614, 616), et
- un dispositif d'activation (620) prévu entre le premier élément porteur (604) et les bras (608, 610) pour faire passer les bras (608, 610) d'une position d'attente dans laquelle les moyens d'accrochage (614, 616) ne sont pas en contact avec la poche (12) à une position d'accrochage dans laquelle les moyens d'accrochage (614, 616) sont en contact avec la poche (12).

19. Dispositif selon la revendication 18, **caractérisé en ce que** le dispositif d'accrochage et de tirage comprend un troisième ensemble de plusieurs bras (606) fixés au premier élément porteur (604) et dont l'extrémité libre de chacun d'eux porte au moins un moyen d'accrochage (614, 616) prévu pour s'accrocher sur la face supérieure de la poche (12).

20. Dispositif selon l'une des revendications 18 ou 19, **caractérisé en ce que** chaque moyen d'accrochage (614, 616) prend la forme d'une ventouse (616), d'une paire de mâchoires (614) ou d'une combinaison de ces éléments.

21. Dispositif selon la revendication 20, **caractérisé en ce que** chaque paire de mâchoires (614) est disposée au voisinage d'une ventouse (616) de manière à ce que le pli (902) de la poche (12) formé par l'aspiration de ladite ventouse (616) se trouve entre les deux mâchoires (802, 804) de ladite paire.

22. Dispositif selon l'une des revendications 20 ou 21, **caractérisé en ce que** les surfaces (822, 824) des moyens d'accrochage formant mâchoires (802, 804) qui viennent serrer la poche (12) sont striées.

23. Dispositif selon l'une des revendications 20 à 22, **caractérisé en ce que** le bord de chaque mâchoire (802, 804) venant en contact avec la poche (12) est muni d'au moins une pointe (812, 814) prévue pour pénétrer dans la poche (12).

24. Dispositif selon l'une des revendications 10 à 23, **caractérisé en ce que** le dispositif de transfert comprend:
- un deuxième élément porteur (1224) mobile verticalement au-dessus du pain de produit alimentaire (10),
- au moins un ensemble de bras (1202, 1204) dont l'extrémité libre de chacun d'eux porte au moins un moyen de soutien (1206, 1208) prévu pour se positionner sous le pain de produit alimentaire déballé (10), et
- un dispositif d'activation (1220) prévu entre le deuxième élément porteur (1224) et les bras (1202, 1204) pour faire passer les bras (1202, 1204) d'une position d'attente dans laquelle les moyens de soutien (1206, 1208) ne sont pas en dessous dudit pain de produit alimentaire (10) à une position de soulèvement dans laquelle les moyens de soutien (1206, 1208) sont en dessous dudit pain de produit alimentaire (10).

25. Dispositif selon la revendication 24, **caractérisé en ce que** le premier élément porteur (604) et le deuxième élément porteur (1224) forment un unique élément.

26. Dispositif selon l'une des revendications 10 à 25, **caractérisé en ce qu'**il comprend un dispositif d'injection d'air ou de gaz inerte (150) prévu pour injecter respectivement de l'air ou du gaz inerte à l'intérieur de la poche (12).

27. Dispositif selon la revendication 26, **caractérisé en ce que** le dispositif de réception comprend des parois formant butée et **en ce que** le dispositif d'injection d'air ou de gaz inerte (150) est fixé sur les parois formant butée.

## Claims

1. Method of removing an envelope (12) enclosing a block of food product (10), comprising:
- a stage of receiving the enclosed block of food product (10),
- a stage of cutting with the help of a cutting arrangement (100),
- a stage of positioning engaging means (614, 616) against the side-walls of the envelope (12),
- a stage of engaging the engaging means (614, 616) with the side-walls of the envelope (12),
- a stage of drawing the envelope (12), by means of the said engaging means (614, 616), in a direction which, in the case of the given side-wall, extends between the direction which is normal to the said side-wall and which is orientated outwards from the block of food product (10) and the direction which is normal to the bottom wall of the envelope (12) and which is upwardly orientated,
- a stage of transferring the block of food product (10) to a station for subsequent processing, **characterised in that** the cutting stage is performed by means of a bottom incision which extends in a direction parallel to the longitudinal direction of the said block of food product (10) and in the bottom wall of the envelope (12), which is situated below the block of food product (10), by displacement of the said cutting arrangement (100).

2. Method according to claim 1, **characterised in that** the cutting stage comprises a phase of cutting an incision which is continuous with the bottom incision in at least one of the ends of the envelope (12).

3. Method according to claim 1, **characterised in that** the cutting stage comprises a phase of cutting a vertical incision which is continuous with the bottom incision in each end of the envelope (12), and a phase of cutting a top incision which extends in a direction parallel to the longitudinal direction of the said block of food product (10) and in the top wall of the envelope (12) which is situated on top of the block of food product (10), which top incision is continuous with the vertical incisions.

4. Method according to claims 1 to 3, **characterised in that** the drawing stage comprises raising the engaging means (614, 616).

5. Method according to claim 3, **characterised in that** the drawing stage comprises, for each side-wall, displacing the engaging means (614, 616) in the direction which is normal to the said side-wall and which is orientated outwards from the block of food product (10).

6. Method according to one of claims 1 to 5, **characterised in that** the said positioning stage is performed prior to the cutting stage.

7. Method according to one of claims 1 to 6, **characterised in that** it comprises, subsequent to the stage of drawing the envelope (12), a stage of positioning the engaging means (614, 616) above a waste-bin and a stage of releasing the engaging means (614, 616).

8. Method according to one of claims 1 to 7, **characterised in that**, when the engaging means are formed by means forming jaws (614) and means forming suckers (616), the engaging stage comprises a stage of applying suction to first zones of the side-walls of the envelope (12) by means of the said suckers (616) and then a stage of closing the jaws (614) on second zones of the side-walls of the envelope (12) which are close to at least one of the first zones.

9. Method according to one of claims 1 to 8, **characterised in that** it comprises, prior to the cutting stage, a stage of injecting air or inert gas into the interior of the envelope (12).

10. Apparatus for removing an envelope (12) enclosing a block of food product (10), comprising:
- an arrangement (102, 104) for receiving the packaged block of food product (10),
- an arrangement (100) for cutting the envelope (12) on the block of food product (10),
- an arrangement for engaging and drawing the envelope (12) which has been cut in this way, the said engaging arrangement comprising engaging means (614, 616) which are intended to position themselves against the side-walls of the envelope (12) and a first carrying member (604) which is secured to the said engaging means (614, 616) and which is able to move in a direction which, in the case of the given side-wall, extends between the direction which is normal to the said side-wall and which is orientated outwards from the block of food product (10) and the direction which is normal to the bottom wall of the envelope (12) and which is upwardly orientated, and
- an arrangement for transferring the block of food product (10) which has been unpacked in this way, which arrangement is intended to transfer it to a station for subsequent processing, **characterised in that**, by being displaced parallel to the longitudinal direction of the said block of food product (10), the cutting arrangement is intended to make a bottom incision which extends in a direction parallel to the longitudinal direction of the said block of food product (10) and in the bottom wall of the envelope (12), which is situated below the block of food product (10).

11. Apparatus according to claim 10, **characterised in that** the cutting arrangement (100) is likewise intended to make a vertical incision which is continuous with the bottom incision in at least one of the ends of the envelope (12).

12. Apparatus according to claim 10, **characterised in that** the cutting arrangement (100) is likewise intended to make a vertical incision which is continuous with the bottom incision in each end of the envelope (12), and a top incision which extends in a direction parallel to the longitudinal direction of the said block of food product (10) and in the top wall of the envelope which is situated on top of the block of food product, which top incision is continuous with the vertical incisions.

13. Apparatus according to one of claims 10 to 12, **characterised in that** the first carrying member (604) is able to move in a vertical direction above the block of food product (10).

14. Apparatus according to claim 12, **characterised in that** the first carrying member (604) is able to move in such a way that, for each side-wall, the engaging means (614, 616) are displaced in the direction which is normal to the said side-wall and which is orientated outwards from the block of food product (10).

15. Apparatus according to one of claims 10 to 14, **characterised in that** the cutting arrangement (100) comprises:
- a cutting means (110) which is intended to make the incisions,
- a pendular support means (118) which supports the cutting means (110) at one of its ends, which are off-centred from its axis of rotation (120),
- an activating means (108) which is intended to activate the cutting means (110),
- a pressing means (116) which is intended to act on another end of the pendular support means (118), which is likewise off-centred from its axis of rotation (120), to press the cutting means (110) against the envelope (12), and
- a displacing means (106) which carries the above means and which is intended for displacement parallel to the longitudinal direction of the block of food product (10).

16. Apparatus according to claim 15, **characterised in that** the cutting means (110) comprises a circular cutting blade (112) and a circular guard (114) co-axial with the blade (112).

17. Apparatus according to claim 16, **characterised in that** the radius of the blade (112) is greater than the radius of the guard (114) and the difference between the two radii is slightly greater than the thickness of the film which forms the envelope (12).

18. Apparatus according to one of claims 10 to 17, **characterised in that** the engaging and drawing arrangement comprises:
- a first set of a plurality of arms (608) which are positioned on one of the sides of the block of food product and of which the free end of each one carries at least one of the engaging means (614, 616),
- a second set of a plurality of arms (610) which are positioned on the other side of the block of food product and of which the free end of each one carries at least one of the engaging means (614, 616), and
- an actuating arrangement (620) which is provided between the first carrying member (604) and the arms (608, 610) to cause the arms (608, 610) to move from a standby position in which the engaging means (614, 616) are not in contact with the envelope (12) to an engaging position in which the engaging means (614, 616) are in contact with the envelope (12).

19. Apparatus according to claim 18, **characterised in that** the engaging and drawing arrangement comprises a third set of a plurality of arms (606) which are fixed to the first carrying member (604) and of which the free end of each one carries at least one engaging means (614, 616) which is intended to engage with the top face of the envelope (12).

20. Apparatus according to either of claims 18 and 19, **characterised in that** each engaging means (614, 616) takes the form of a sucker (616), a pair of jaws (614) or a combination of such members.

21. Apparatus according to claim 20, **characterised in that** each pair of jaws (614) is arranged in the vicinity of a sucker (616) in such a way that the fold (902) in the envelope (12) which is formed by the suction from the said sucker (616) is situated between the two jaws (802, 804) which form the said pair.

22. Apparatus according to either of claims 20 and 21, **characterised in that** those surfaces (822, 824) of the engaging means formed by jaws (802, 804) which grip the envelope (12) are striated.

23. Apparatus according to one of claims 20 to 22, **characterised in that that** edge of each jaw (802, 804) which comes into contact with the envelope (12) is fitted with at least one point (812, 814) which is intended to penetrate into the envelope (12).

24. Apparatus according to one of claims 10 to 23, **characterised in that** the transferring arrangement comprises:
- a second carrying member (1124) which is able to move vertically above the block of food product (10),
- at least one set of arms (1202, 1204) of which the free end of each one carries at least one supporting means (1206, 1208) which is intended to position itself under the block of food product (10), and
- an actuating arrangement (1220) which is provided between the second carrying member (1224) and the arms (1202, 1204) to cause the arms (1202, 1204) to move from a standby position in which the supporting means (1206, 1208) are not below the said block of food product (10) to a lifting position in which the supporting means (1206, 1208) are below the said block of food product (10).

25. Apparatus according to claim 24, **characterised in that** the first carrying member (604) and the second carrying member (1224) form a single member.

26. Apparatus according to one of claims 10 to 25, **characterised in that** it comprises an arrangement for injecting air or inert gas (150) which is intended to inject either air or inert gas into the interior of the envelope (12).

27. Apparatus according to claim 26, **characterised in that** the receiving arrangement comprises walls which form stops and **in that** the arrangement for injecting air or inert gas (150) is fixed to the walls which form stops.

## Patentansprüche

1. Verfahren zum Entfernen einer Tasche (12), die ein brotartiges Produkt (10) einhüllt, Folgendes aufweisend:
- einen Schritt des Empfangens des umhüllten brotartigen Produkts (10),
- einen Schritt des Schneidens mit Hilfe einer Schneidvorrichtung (100),
- einen Schritt des Positionierens von Aufhängmitteln (614, 616) gegen die Seitenwände der Tasche (12),
- einen Schritt des Aufhängens der Aufhängmittel (614, 616) auf den Seitenwänden der Tasche (12),
- einen Schritt des Ziehens der Tasche (12) durch die Aufhängmittel (614, 616) in eine Richtung, die sich für den betreffenden seitlichen Teil zwischen der Richtung senkrecht zu der Seitenwand und nach außerhalb des brotartigen Produkts (10) und der Richtung senkrecht zu der unteren Wand der Tasche (12) und nach oben gerichtet erstreckt,
- einen Schritt des Transfers des brotartigen Produkts (10) zu einem Posten der späteren Bearbeitung, **dadurch gekennzeichnet, dass** der Schritt des Einschneidens mittels eines unteren Einschnitts, der sich in eine Richtung parallel zu der Längsrichtung des brotartigen Produkts (10) erstreckt und in der unteren Wand der Tasche (12), die sich unter dem brotartigen Produkt (10) befindet, durch Verlagern der Schneidvorrichtung (100) erfolgt.

2. Verfahren nach Anspruch 1, **dadurch gekennzeichnet, dass** der Schneidschritt eine Phase des Schneidens eines Einschnitts in mindestens eines der Enden der Tasche (12) in Kontinuität mit dem unteren Einschnitt erfolgt.

3. Verfahren nach Anspruch 1, **dadurch gekennzeichnet, dass** der Schneidschritt eine Schnittphase eines vertikalen Einschnitts in jedes Ende der Tasche (12) in Kontinuität mit dem unteren Einschnitt aufweist, und eine Phase des Schneidens eines oberen Einschnitts, der sich in eine Richtung parallel zu der Längsrichtung des brotartigen Produkts (10) und in der oberen Wand der Tasche (12), die auf dem brotartigen Produkt (10) in Kontinuität mit den vertikalen Einschnitten erstreckt.

4. Verfahren nach Anspruch 1 bis 3, **dadurch gekennzeichnet, dass** der Schritt des Ziehens in einem Anheben der Aufhängmittel (614, 616) besteht.

5. Verfahren nach Anspruch 3, **dadurch gekennzeichnet, dass** der Schritt des Ziehens für jede Seitenwand aus einem Verlagern der Aufhängmittel (614, 616) in die senkrechte Richtung zu der Seitenwand und nach außerhalb des brotartigen Produkts (10) gerichtet besteht.

6. Verfahren nach einem der Ansprüche 1 bis 5, **dadurch gekennzeichnet, dass** der Positionierungsschritt vor dem Schneidschritt ausgeführt wird.

7. Verfahren nach einem der Ansprüche 1 bis 6, **dadurch gekennzeichnet, dass** es nach dem Schritt des Schneidens der Tasche (12) einen Positionierungsschritt der Aufhängmittel (614, 616) oberhalb eines Abfalleimers, und einen Schritt des Freigebens der Aufhängmittel (614), 616) aufweist.

8. Verfahren nach einem der Ansprüche 1 bis 7, **dadurch gekennzeichnet, dass** der Aufhängschritt, wenn die Aufhängmittel aus Mitteln bestehen, die Backen (614) bilden, und aus Mitteln, die Saugnäpfe (616) bilden, aus einem Schritt des Ansaugens der ersten Zonen der Seitenwände der Tasche (12) durch die Saugnäpfe (616) und dann einem Schritt des Schließens der Backen (614) auf den zweiten Zonen der Seitenwände der Tasche (12), die sich mindestens in der Nähe einer der ersten Zonen befinden, besteht.

9. Verfahren nach einem der Ansprüche 1 bis 8, **dadurch gekennzeichnet, dass** es vor dem Schritt des Schneidens einen Schritt des Einspritzens von Luft oder Inertgas in das Innere der Tasche (12) aufweist.

10. Vorrichtung zum Entfernen einer Tasche (12), die ein brotartiges Produkt (10) umhüllt, das Folgendes aufweist:
- eine Vorrichtung (102, 104) zum Aufnehmen des verpackten brotartigen Produkts (10),
- eine Vorrichtung zum Schneiden (100) der Tasche (12) des brotartigen Produkts (10),
- eine Aufhäng- und Ziehvorrichtung der derart geschnittenen Tasche (12), wobei die Aufhängvorrichtung Aufhängmittel (614, 616) aufweist, die vorgesehen sind, um sich gegen die Seitenwände der Tasche (12) zu positionieren, und ein erstes Tragelement (604), das fest mit den Aufhängmitteln (614, 616) verbunden und in eine Richtung beweglich ist, die sich für die betreffende Seitenwand zwischen der Richtung senkrecht zu der Seitenwand und nach außerhalb des brotartigen Produkts (10) gerichtet, und der Richtung senkrecht zu der unteren Wand der Tasche (12) und nach oben gerichtet erstreckt, und
- eine Vorrichtung zum Transferieren des derart ausgepackten brotartigen Produkts (10), die vorgesehen ist, um es zu einem Posten zur späteren Behandlung zu transferieren, **dadurch gekennzeichnet, dass** die Schneidvorrichtung dazu vorgesehen ist, durch Verlagern parallel zu der Längsrichtung des brotartigen Produkts (10) einen unteren Einschnitt auszuführen, der sich in eine Richtung parallel zu der Längsrichtung des brotartigen Produkts (10) und in der unteren Wand der Tasche (12), die sich unter dem brotartigen Produkt (10) befindet, erstreckt.

11. Vorrichtung nach Anspruch 10, **dadurch gekennzeichnet, dass** die Schneidvorrichtung (100) auch vorgesehen ist, um einen vertikalen Einschnitt in mindestens einem der Enden der Tasche (12) in Kontinuität mit dem unteren Schnitt auszuführen.

12. Vorrichtung nach Anspruch 10, **dadurch gekennzeichnet, dass** die Schneidvorrichtung (100) auch vorgesehen ist, um einen vertikalen Einschnitt in jedem Ende der Tasche (12) in Kontinuität mit dem unteren Einschnitt, sowie einen oberen Einschnitt auszuführen, der sich in eine Richtung parallel zu der Längsrichtung des brotartigen Produkts (10) und in der oberen Wand der Tasche (12), die sich auf dem brotartigen Produkt (10) befindet, in Kontinuität mit den vertikalen Einschnitten erstreckt.

13. Vorrichtung nach einem der Ansprüche 10 bis 12, **dadurch gekennzeichnet, dass** das erste Tragelement (604) entlang einer vertikalen Richtung oberhalb des brotartigen Produkts (10) beweglich ist.

14. Vorrichtung nach Anspruch 12, **dadurch gekennzeichnet, dass** das erste Tragelement (604) derart beweglich ist, dass sich die Aufhängmittel (614, 616) für jede Seitenwand in die Richtung senkrecht zu der Seitenwand und nach außerhalb des brotartigen Produkts (10) gerichtet bewegen.

15. Vorrichtung nach einem der Ansprüche 10 bis 14, **dadurch gekennzeichnet, dass** die Schneidvorrichtung (100) Folgendes aufweist:
- ein Schneidmittel (110), das zum Ausführen der Einschnitte vorgesehen ist;
- ein pendelndes Tragmittel (118), das das Schneidmittel (110) auf einem seiner Enden, das in Bezug zu seiner Drehachse (120) achsversetzt ist, stützt;
- ein Betätigungsmittel (108), das vorgesehen ist, um das Schneidmittel (110) zu aktivieren,
- ein Mittel zum Andrücken (116), das vorgesehen ist, um auf ein anderes Ende des pendelnden Tragmittels (118) einzuwirken, das ebenfalls in Bezug zu seiner Drehachse (120) achsversetzt ist, um das Schneidmittel (110) gegen die Tasche (12) zu drücken, und
- ein Bewegungsmittel (106), das die vorhergehenden Mittel trägt und dazu vorgesehen ist, sich parallel zu der Längsrichtung des brotartigen Produkts (10) zu bewegen.

16. Vorrichtung nach Anspruch 15, **dadurch gekennzeichnet, dass das** Schneidmittel (110) eine schneidende kreisförmige Klinge (112) und einen kreisförmigen Schutz (114), der mit der Klinge (112) koaxial ist, aufweist.

17. Vorrichtung nach Anspruch 16, **dadurch gekennzeichnet, dass** der Radius der Klinge (112) größer ist als der Radius des Schutzes (114) und dass der Unterschied zwischen den zwei Radien leicht größer ist als die Stärke der Folie, die die Tasche (12) bildet.

18. Vorrichtung nach einem der Ansprüche 10 bis 17, **dadurch gekennzeichnet, dass** die Aufhäng- und Ziehvorrichtung Folgendes aufweist:
- eine erste Einheit aus mehreren Armen (608), die auf einer der Seiten des brotartigen Produkts (10) positioniert sind, und deren freies Ende jeweils mindestens eines der Aufhängmittel (614, 616) trägt,
- eine zweite Einheit mehrerer Arme (610), die auf der anderen Seite des brotartigen Produkts (10) positioniert ist, und deren freies Ende jeweils mindestens eines der Aufhängmittel (614, 616) trägt, und
- eine Betätigungsvorrichtung (620), die zwischen dem ersten Tragelement (604) und den Armen (608, 610) vorgesehen ist, um die Arme (608, 610) von einer Wartestellung, in der die Aufhängmittel (614, 616) nicht mit der Tasche (612) in Berührung sind, zu einer Aufhängstellung übergehen zu lassen, in der die Aufhängmittel (614, 616) mit der Tasche (12) in Berührung sind.

19. Vorrichtung nach Anspruch 18, **dadurch gekennzeichnet, dass** die Aufhäng- und Ziehvorrichtung eine dritte Einheit aus mehreren Armen (606) aufweist, die an dem ersten Träger (604) befestigt ist, und deren freies Ende jeweils mindestens ein Aufhängmittel (614, 616) trägt, das dazu vorgesehen ist, sich auf der oberen Seite der Tasche (12) aufzuhängen.

20. Vorrichtung nach einem der Ansprüche 18 oder 19, **dadurch gekennzeichnet, dass** jedes Aufhängmittel (614, 616) die Form eines Saugnapfs (616), eines Paars Backen (614) oder einer Kombination dieser Elemente hat.

21. Vorrichtung nach Anspruch 20, **dadurch gekennzeichnet, dass** jedes Paar Backen (614) in der Nähe eines Saugnapfs (616) derart vorgesehen ist, dass die Falte (902) der Tasche (12), die durch das Ansaugen des Saugnapfs (616) gebildet wird, zwischen den zwei Backen (802, 804) des Paars liegt.

22. Vorrichtung nach einem der Ansprüche 20 oder 21, **dadurch gekennzeichnet, dass** die Flächen (822, 824) der Aufhängmittel, die die Backen (802, 804) bilden, die die Tasche (12) einklemmen, geriffelt sind.

23. Vorrichtung nach einem der Ansprüche 20 bis 22, **dadurch gekennzeichnet, dass** der Rand jeder Backe (802, 804), der mit der Tasche (12) in Berührung kommt, mit mindestens einer Spitze (812, 814) versehen ist, die vorgesehen ist, um in die Tasche (12) einzudringen.

24. Vorrichtung nach einem der Ansprüche 10 bis 23, **dadurch gekennzeichnet, dass** die Transfervorrichtung Folgendes aufweist:
- ein zweites Tragelement (1224), das vertikal oberhalb des brotartigen Produkts (10) beweglich ist,
- mindestens eine Einheit Arme (1202, 1204), deren freies Ende jeweils mindestens ein Stützmittel (1206, 1208) trägt, das vorgesehen ist, um sich unter dem ausgepackten brotartigen Produkt (10) zu positionieren, und
- eine Betätigungsvorrichtung (1220), die zwischen dem zweiten Tragelement (1224) und den Armen (1202, 1204) vorgesehen ist, um die Arme (1202, 1204) von einer Wartestellung, in der die Stützmittel (1206, 1208) nicht unterhalb des brotartigen Produkts (10) sind, auf eine Anhebeposition, in der die Stützmittel (1206, 1208) unterhalb des brotartigen Mittels (10) sind, übergehen zu lassen.

25. Vorrichtung nach Anspruch 24, **dadurch gekennzeichnet, dass** das erste Tragelement (604) und das zweite Tragelement (1224) ein einziges Element bilden.

26. Vorrichtung nach einem der Ansprüche 10 bis 25, **dadurch gekennzeichnet, dass** sie eine Vorrichtung zum Einspritzen von Luft oder Inertgas (150) aufweist, die vorgesehen ist, um jeweils Luft oder Inertgas in das Innere der Tasche (12) einzuspritzen.

27. Vorrichtung nach Anspruch 26, **dadurch gekennzeichnet, dass** die Aufnahmevorrichtung Wände aufweist, die einen Anschlag bilden, und dass die Vorrichtung zum Einspritzen von Luft oder Inertgas (150) auf den Anschlag bildenden Wänden befestigt ist.
